# EUROPEAN PATENT APPLICATION

(11) **EP 3 502 873 A2**
(43) Date of publication of application: **26.06.2019**
(21) Application number: 18214144.0
(22) Date of filing: 19.12.2018
(51) Int. Cl.: G06F 8/61

(54) **METHOD AND APPARATUS FOR APPLICATION DEVELOPMENT ENVIRONMENT**

(30) Priority: 22.12.2017 JP 2017246623
(71) Applicant: Kabushiki Kaisha Toshiba, Minato-ku Tokyo 105-8001 (JP); Toshiba TEC Kabushiki Kaisha, 141-8562 Tokyo (JP)
(72) Inventor: SASAKI, Takahiro, Shinagawa-ku,, Tokyo 141-8562 (JP)
(74) Representative: Fédit-Loriot

(57) **Abstract**

A method for an application development environment provides a development environment of an application. The method for the application development environment receives an installation request of the application. The method permits installation of a development application, when it is determined that the application is the development application. The method prohibits installation of a distribution application, when it is determined that the application is the distribution application.

## Description

### FIELD

Embodiments described herein relate generally to a technology of suppressing reverse engineering of an application.

### BACKGROUND

An application is installed in an apparatus such as a multi-function peripheral (MFP), and a function may be added to the apparatus. The application is read and installed in a state in which a group of files including source codes is packaged in one file or a plurality of files. The application is written in a programming language such as Java (registered trademark), Python, or C language. In the apparatus, the application is converted into a machine language in an execution environment prepared for each language and is executed. A function of the application may be provided by an application programming interface (API).

Development of the application is performed by an apparatus development company or a software development company. Distribution of the applications to a user is done through a dedicated Web site or done by an individual contract. For the application development company, an internal structure of the application or a binary source code is intellectual property and needs to be protected.

A distribution application indicates an application in a distribution state after being distributed. The distribution application is encrypted to prevent from being tampered and to prevent loss of intellectual property. Accordingly, even if the distribution application is obtained, it is difficult to know the internal structure thereof in general. An apparatus such as the MFP can usually install only the distribution application.

A software development kit (SDK) (for example, as described in Japanese Patent No. 4938869) is used for developing the application. The SDK provides a development environment of the application corresponding to an apparatus which is an installation target of the application. The SDK includes a library and a technical document necessary for development and debugging, and an emulator for simulating an operation of the apparatus.

A development application indicates an application under development. A development application is not encrypted in general. An operation of the development application can be confirmed by installing the development application in an emulator. An apparatus such as an MFP including an application development mode may be loaned to a developer of the applications. Not only the development application but also the distribution application are installed in the apparatus including the application development mode. By installing the development application in the apparatus and setting the apparatus to the application development mode, the operation of the development application can be confirmed.

In the emulator and application development mode, a file system that cannot be accessed in a normal mode can be accessed such that a user can confirm the operation of the developed application. The emulator and the application development mode has a debug log output function included, and error information and a processing situation necessary for development can be output.

### SUMMARY OF INVENTION

To solve the above-cited problems, there is provided a method for an application development environment which provides a development environment of an application, comprising:
receiving an installation request of the application;
permitting installation of a development application, when it is determined that the application is the development application; and
prohibiting installation of a distribution application, when it is determined that the application is the distribution application.

Preferably it is determined that the application is the development application when the application is determined to be an unencrypted application.

Preferably it is determined that the application is the distribution application when the application is determined to be an encrypted application.

Preferably it is determined that the application is the distribution application when the application is determined to have a legitimate electronic signature.

Preferably it is determined that the application is the distribution application when the application is determined to have a setting file.

Preferably it is determined that the application is the development application when the application is determined to have an attribute value and an extension of a predetermined file.

In another exemplary embodiment, there is also provided an apparatus comprising:
a memory; and
a processor configured to execute instructions of a program stored in the memory, the instructions being for a method for an application development environment which provides a development environment of an application, the instructions including:
   receiving an installation request of the application;
   permitting installation of a development application, when it is determined that the application is the development application; and
   prohibiting installation of a distribution application, when it is determined that the application is the distribution application.

Preferably the processor is configured to determine that the application is the development application when the application is determined to be an unencrypted application.

Preferably the processor is configured to determine that the application is the distribution application when the application is determined to be an encrypted application.

Preferably the processor is configured to determine that the application is the development application when the application is determined to have an attribute value and an extension of a predetermined file.

In yet another exemplary embodiment, there is also provided an apparatus comprising:
a memory; and
a processor configured to execute programs stored in the memory, the stored programs including:
   an application development mode in which a debug log is able to be output and an operation of an application is confirmed; and
   a normal mode in which the debug log is not able to be output,
wherein the processor is configured:
   when an installation request of the application is received in the application development mode,
   if it is determined that the application is a development application, to permit installation of the development application, and
   if it is determined that the application is a distribution application, to prohibit installation of the distribution application.

Preferably the installation of the distribution application is permitted in the normal mode, and
the processor is configured, when it is determined that the distribution application is installed in the application development mode, to uninstall the installed distribution application.

Preferably the processor is configured:
when the installation request of the application is received in the application development mode,
if it is determined that the application is the development application, to perform decryption of the development application which is encrypted with a secret key by using a public key which is one of a pair of the secret key and the public key,
if the development application is able to be decrypted, to permit installation of the development application, and
if the development application is not able to be decrypted, to prohibit the installation of the development application.

Preferably the processor is configured:
when the installation request of the application is received in the application development mode,
if it is determined that the application is the development application, to generate a hash value by decrypting an electronic signature that is an electronic signature of the development application and that encrypts identification information of the apparatus using a signature secret key, with a verification public key which is one of a pair of a signature private key and the verification public key,
if the hash value matches with a hash value of the identification information of the apparatus, to permit installation of the secret key, and
if the hash value does not match with the hash value of the identification information, to prohibit the installation of the secret key.

In still another exemplary embodiment, there is also provided a method for an application development environment which provides a development environment of an application, comprising:
performing an application development mode in which a debug log is able to be output and an operation of an application is confirmed; or performing a normal mode in which the debug log is not able to be output,
wherein the method comprises:
   when an installation request of the application is received in the application development mode,
   if it is determined that the application is a development application, permitting installation of the development application, and
   if it is determined that the application is a distribution application, prohibiting installation of the distribution application.

Preferably the installation of the distribution application is permitted in the normal mode, and
the method comprises:
when it is determined that the distribution application is installed in the application development mode, uninstalling the installed distribution application.

Preferably the method comprises:
when the installation request of the application is received in the application development mode,
if it is determined that the application is the development application, performing decryption of the development application which is encrypted with a secret key by using the public key which is one of a pair of the secret key and the public key,
if the development application is able to be decrypted, permitting installation of the development application, and
if the development application is not able to be decrypted, prohibiting the installation of the development application.

Preferably the method comprises:
when the installation request of the application is received in the application development mode,
if it is determined that the application is the development application, generating a hash value by decrypting an electronic signature that is an electronic signature of the development application and that encrypts identification information of the apparatus using a signature secret key, with a verification public key which is one of a pair of a signature private key and the verification public key,
if the hash value matches with a hash value of the identification information of the apparatus, permitting installation of the secret key, and
if the hash value does not match with the hash value of the identification information, prohibiting the installation of the secret key.

### DESCRIPTION OF THE DRAWINGS

The above and other objects, features and advantages of the present invention will be made apparent from the following description of the preferred embodiments, given as non-limiting examples, with reference to the accompanying drawings, in which:
FIG. 1 is a block diagram of a PC.
FIG. 2 is a flowchart illustrating installing of an application.
FIG. 3 is a block diagram illustrating an arrangement of an MFP.
FIG. 4 is a flowchart illustrating installing of another application.
FIG. 5 is a flowchart illustrating uninstalling of a distribution application.
FIG. 6 is a block diagram illustrating the arrangement of the MFP.
FIG. 7 is a flowchart illustrating installing of a development application.
FIG. 8 is a flowchart illustrating installing of a public key.

### DETAILED DESCRIPTION

Information output by the debug log output function is necessary for development, but it is internal information unknown to a normal MFP, and there is a risk that an application may be subject to reverse engineering by using the information.

Since a development application is under the control of a developer, the reverse engineering performed by a third party can be prevented from being performed. However, a distribution application can be obtained by the third party through a sales website or the like. Therefore, at present, the third party installs the distribution application in an apparatus having an emulator or an application development mode, uses internal information outputted by the debug log output function, and thereby, there is a risk that the distribution application may be subject to reverse engineering.

The present specification is to provide a technology of suppressing reverse engineering of an application.

In general, according to one embodiment, a method for an application development environment provides a development environment of an application. The method for the application development environment receives an installation request of the application; permits installation of a development application, if it is determined that the application is the development application; and prohibits installation of a distribution application, if it is determined that the application is the distribution application.

In general, according to some embodiments, an apparatus includes an application development mode in which a debug log is able to be output and an operation of an application is confirmed, and a normal mode in which the debug log is not able to be output. When an installation request of the application is received in the application development mode, when it is determined that the application is a development application, installation of the development application is permitted, and when it is determined that the application is a distribution application, installation of the distribution application is prohibited.

Hereinafter, embodiments will be described with reference to the drawings.

### First Embodiment

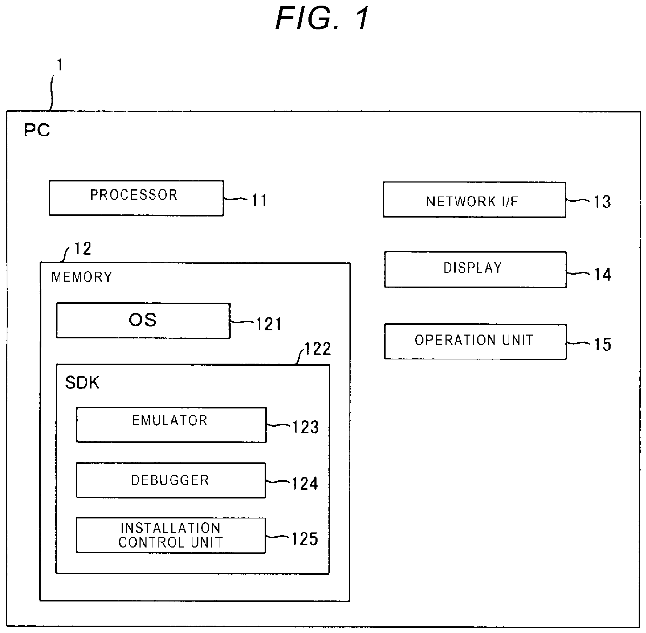

FIG. 1 is a block diagram of a personal computer (PC) 1.

The PC 1 includes a processor 11, a memory 12, a network interface (I/F) 13, a display 14, and an operation unit 15.

The memory 12 stores various types of programs, applications, threshold values, setting values, and the like in addition to an operating system (OS) 121 and an application development environment program (SDK) 122.

The processor 11 performs various functions by activating the OS 121 and reading an application. The processor 11 provides the user with a development environment of the application of the MFP (apparatus) by reading the SDK 122. The SDK 122 includes not only a library and a technical document for realizing the development environment of the application, but also various programs and setting files. The SDK 122 includes an emulator 123, a debugger 124, and an installation control unit (controller) 125.

The emulator 123 mimics an operation of at least a part of the MFP and provides the same function as the actual MFP in the present embodiment. The emulator 123 installs an application of the MFP and causes the application to perform the same operation as when the application operates in the actual MFP.

The debugger 124 outputs error information generated when the application operates in the emulator 123 and a debug log which is a processing situation of the application. A user can confirm the operation of the application under development using the emulator 123 and the debugger 124.

The installation control unit 125 operates in the emulator 123 and installs the application in the emulator 123. The installation control unit 125 will be described below.

The network I/F 13 is an interface through which the PC 1 communicates with an external device.

The display 14 displays an image such as a user interface (UI) for developing an application or a UI for installing the application.

The operation unit 15 is a keyboard, a mouse, and the like, and receives input data from a user.

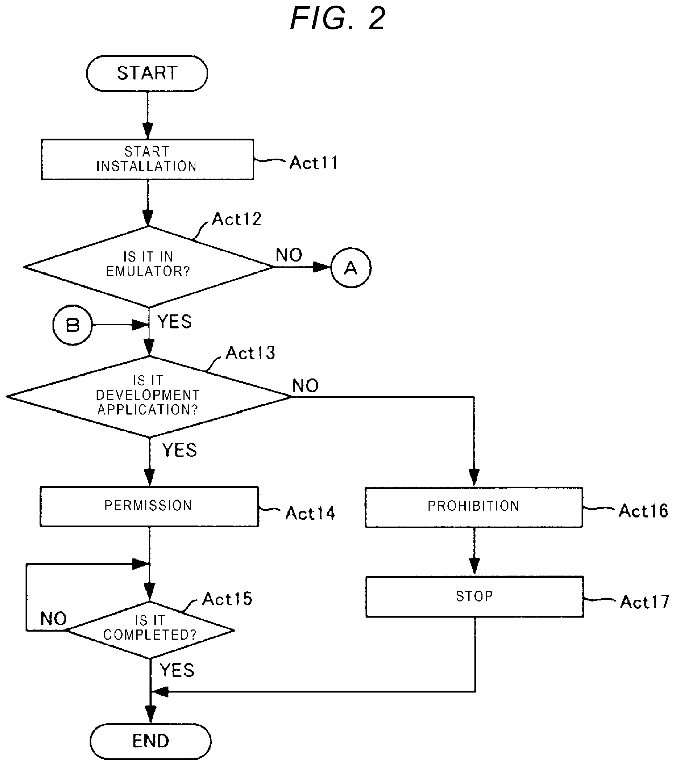

Hereinafter, installing of the application performed by the installation control unit 125 will be described with reference to the flowchart of FIG. 2. The installation control unit 125 is read by the processor 11 and implemented. It is assumed that the SDK 122 is activated.

The installation control unit 125 of the SDK 122 receives an installation request of the application to the emulator 123, and starts installing of the application (Act 11).

In the present embodiment, the installation control unit 125 operates in the emulator 123, but is a module that can operate also in the MFP. The installation control unit 125 changes an operation depending on whether an operation environment is the emulator 123 or the MFP. Processing of the installation control unit 125 when the operation environment is the MFP (Act 12: NO) will be described in the second embodiment and the following.

If the operation environment is the emulator 123 (Act 12: YES), the installation control unit 125 determines whether the application requested for installation is a distribution application or a development application (Act 13).

The distribution application indicates an application that is distributed to a third party other than a developer of the application and scheduled to be in a distribution state. In some embodiments, it is assumed that the distribution application includes a signer and an electronic signature certifying that electronic signature is not tampered after a signature. The electronic signature may use a code signing certificate. In the present embodiment, it is assumed that the distribution application is encrypted.

The development application is under development and indicates an application scheduled to be under management of a developer. In some embodiments, it is assumed that no electronic signature is attached to the development application. In some embodiments, it is assumed that the development application is not encrypted.

The installation control unit 125 may determine that the encrypted application is a distribution application and determine that the unencrypted application is the development application. The application includes a plurality of files and is packaged when being installed, the installation control unit 125 determines that the application with the legitimate electronic signature is the distribution application, and determines that the application without the legitimate electronic signature is the development application.

The installation control unit 125 may determine that an application having a setting file indicating the distribution application is the distribution application.

The installation control unit 125 may determine that an application having a setting file indicating the development application or may determine that an application without the setting file indicating the distribution application is the development application.

The installation control unit 125 may determine an application having an attribute value and an extension of a predetermined file is the development application and may determine that an application having an attribute value and an extension of a predetermined file (these are different from those of the development application) is the distribution application.

When it is determined that an application requested for installation is the development application (Act 13: YES), the installation control unit 125 permits installation of the development application (Act 14), proceeds to the installation of the development application (Act 15: NO, Act 15), and the installation ends (Act 15: YES).

If it is determined that the application requested for installation is the distribution application (Act 13: NO), the installation control unit 125 prohibits the installation of the distribution application (Act 16) and stops or ends the installing of the distribution application (Act 17).

If the distribution application is installed in the emulator 123, it is possible to cause the emulator 123 to output internal information which cannot be known by a normal MFP, and in some case it is possible to know the internal structure of the distribution application. Accordingly, there is a risk that reverse engineering of the distribution application becomes easy.

In some embodiments, since the distribution application is prohibited from being installed in the emulator 123, the reverse engineering of the distribution application can be suppressed. In some embodiments, the development application is permitted to be installed in the emulator 123, but since the development application can be managed by a developer, the reverse engineering of the development application to a third party can be prevented by management of the developer.

### Second Embodiment

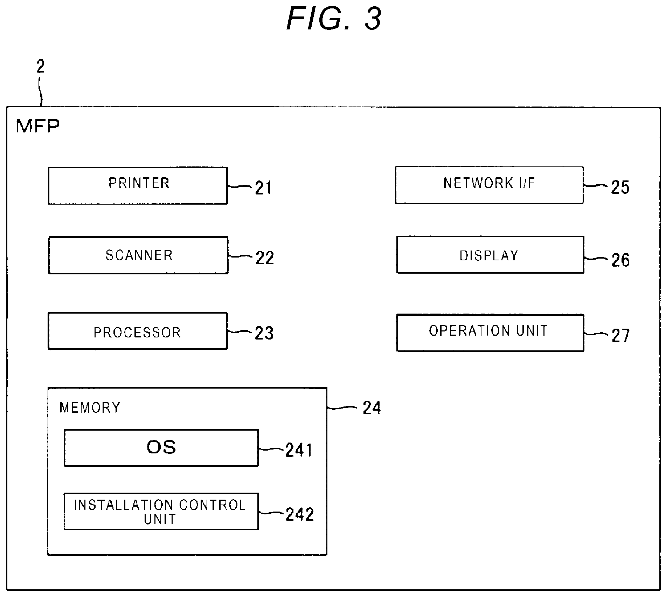

FIG. 3 is a block diagram illustrating an arrangement of the MFP 2.

The MFP 2 includes a plurality of functions such as a print function, a scan function, and a FAX transmission function. The MFP 2 includes a printer 21, a scanner 22, a processor 23, a memory 24, a network I/F 25, a display 26, and an operation unit 27.

The network I/F 25 is an interface through which the MFP 2 communicates with an external device.

The display 26 is a touch panel or the like, and displays setting information and an operation status of the MFP 2, log information, notification to a user, and the like.

The operation unit 27 is a key or a touch panel, and receives input data from the user.

The printer 21 forms an image on a sheet. A printing method of the printer 21 may be any one of an electronic transfer method, an ink jet method, or a thermal transfer method. The sheet to be printed may be paper, envelope, or transparency.

The scanner 22 includes an image capturing element, forms an image on the sheet, and generates image data. The MFP 2 can form an image on the sheet, based on the image data by using the printer 21 or can fax the image to an external destination via the network I/F 25.

In addition to the OS 241 and the installation control unit 242, the memory 24 stores various programs, applications, threshold values, set values, and the like.

The processor 23 controls the entire MFP 2. The processor 23 activates the OS 241 and implements various functions by reading the application.

The MFP 2 includes a normal mode in which error information and a debug log which is a processing status of an application cannot be output, and an application development mode in which the debug log can be output. The application development mode is a mode for confirming an operation of the development application.

The installation control unit 242 permits only installation of the distribution application in the normal mode, and permits only installation of the development application in the application development mode.

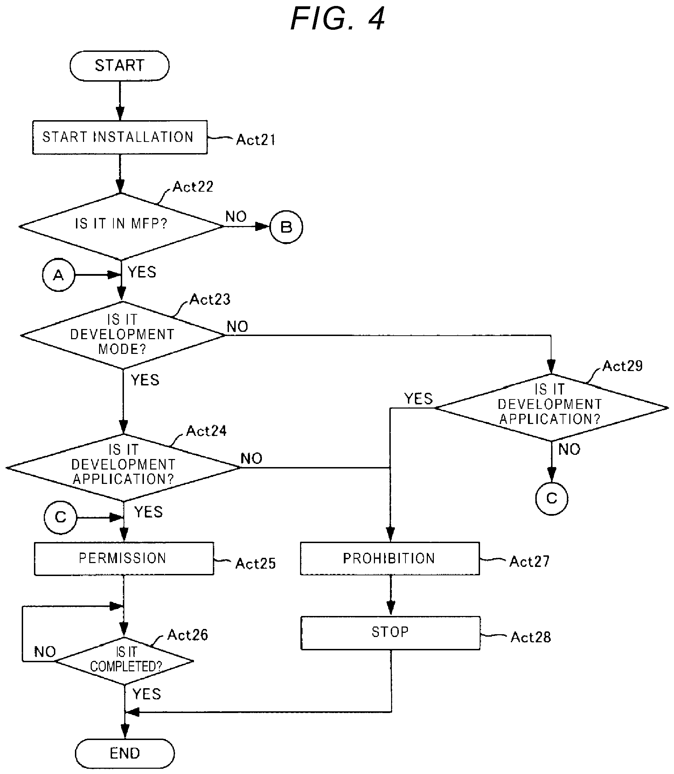

Hereinafter, application installing performed by the installation control unit 242 will be described with reference to a flowchart of FIG. 4. The installation control unit 242 is read by the processor 23 and implemented.

The installation control unit 242 receives an installation request of the application and starts the installing of the application (Act 21).

If it is determined that an operation environment is the emulator 123 (Act 22: NO), the installation control unit 242 performs the processing of Act 13 in FIG. 2 according to the first embodiment.

If it is determined that the operation environment is the MFP 2 (Act 22: YES) and if the application is in the application development mode (Act 23: YES), the installation control unit 242 performs processing of Act 24 to Act 28 which are the same processing as in Act 13 to Act 17 in FIG. 1 according to the first embodiment. That is, if an application that receives an installation request is the development application (Act 24: YES), the installation control unit 242 permits installation of the development application (Act 25), and completes the installation (Act 26).

If an application that receives the installation request is the distribution application (Act 24: NO), the installation control unit 242 prohibits installation of the distribution application (Act 27), and stops or ends the installation (Act 28) .

If the application is in the normal mode (Act 23: NO), and if the application that receives the installation request is the development application (Act 29: YES), the installation control unit 242 prohibits the installation of the development application (Act 27) and stops or ends the installation (Act 28) .

Meanwhile, if the application that receives the install request is the distribution application (Act 29: NO), the installation control unit 242 permits installation of the distribution application (Act 25) and completes the installation (Act 26: YES).

If the distribution application is executed in the application development mode in the MFP 2, it is possible to cause the MFP 2 to output internal information which cannot be unknown in the normal mode, and, in some case, it is possible to know an internal structure of the distribution application. Accordingly, there is a risk that reverse engineering of the distribution application is easily performed.

In some embodiments, since the distribution application is prohibited from being installed in the application development mode, the reverse engineering of the distribution application can be suppressed. In addition, in the present embodiment, the development application is permitted to be installed in the application development mode, but since the development application can be managed by a developer, reverse engineering of the development application to a third party can be prevented by management of the developer.

In some embodiments, since the installation control unit 242 is a program module that can be operated by the emulator 123, it is unnecessary to develop a program module of the installation control unit 242 dedicated for operating in the MFP 2, and thereby, cost can be reduced.

### Third Embodiment

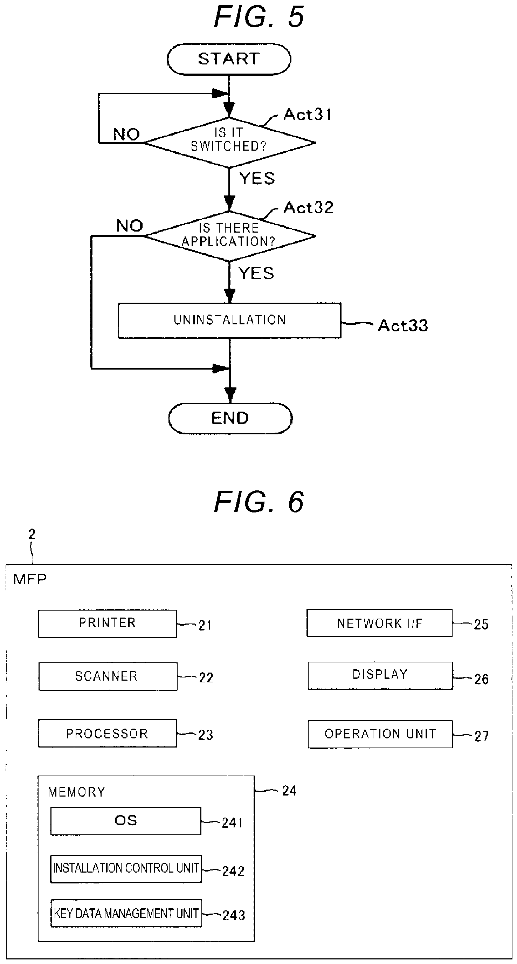

A device arrangement of the MFP 2 according to the present embodiment is the same as in the second embodiment. Uninstalling performed by the installation control unit 242 of the MFP 2 when switching is made from the normal mode to the application development mode will be described with reference to a flowchart of FIG. 5.

If the MFP 2 switches from the normal mode to the application development mode (Act 31: YES), in a case where the distribution application installed in the MFP 2 exists (Act 32: YES), the installation control unit 242 uninstalls all the installed distribution applications (Act 33).

If the MFP 2 does not switch from the normal mode to the application development mode (Act 31: NO), the installation control unit 242 waits for the processing of Act 32 and Act 33 until switching (Act 31: YES). If there is no distribution application installed in the MFP 2 (Act 32: NO), the installation control unit 242 ends the present processing.

In Act 32, if there is an installed distribution application or development application (Act 32: YES), the installation control unit 242 may uninstall all the installed distribution applications or the all development applications (Act 33).

In some embodiments, even if the distribution application is installed in the normal mode, the distribution application is removed during the application development mode. Accordingly, in some embodiments, it is possible to reliably prevent the distribution application from being executed in the application development mode, and it is possible to further suppress the reverse engineering of the distribution application.

### Fourth Embodiment

For the purpose of demonstrating an application or the like, there is a case where the development application is sent to a customer and the development application is executed by the MFP 2 in the application development mode of the customer. In this case, since the development application is separated from the control of a developer, for example, the development application is transferred from the customer to a third party, and the development application may be subject to reverse engineering by a third party. Accordingly, in some embodiments, a technology capable of suppressing reverse engineering of the development application is provided.

In some embodiments, the development application is encrypted by a public key method. That is, a pair of a public key and a secret key is generated by the SDK 122, the development application is encrypted with the secret key by the SDK 122, and the public key is output. The development application may be encrypted through more complex encryption procedures by using an additional rule. The generation of the pair of keys and the encryption of the development application may be performed by an application different from the SDK 122.

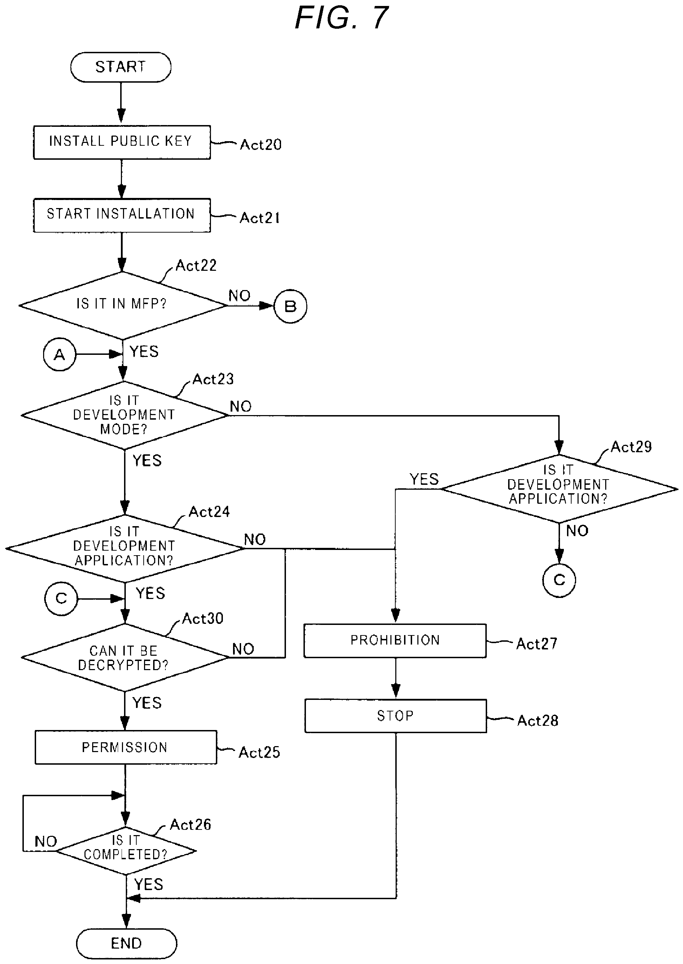

FIG. 6 is a block diagram illustrating an arrangement of the MFP 2. Hereinafter, installing of the development application performed by a key data management unit 243 and an installation control unit 242 will be described with reference to a flowchart of FIG. 7.

In some embodiments, the key data management unit 243 is provided in the memory 24. The key data management unit 243 is read by the processor 23 and implemented. The key data management unit 243 installs the public key on the MFP 2 before the development application is installed (Act 20).

Since Act 21 to Act 29 are the same processing as Act 21 to Act 29 of FIG. 4, descriptions thereof will be omitted or simplified.

In the development mode (Act 23: YES), the installation control unit 242 determines whether an application that receives an installation request is a development application or a distribution application (Act 24).

If the application has an attribute value and an extension of a predetermined file, the installation control unit 242 determines that the application is a development application. If the application has an attribute value or an extension of a predetermined file that is different from the development application, the installation control unit 242 determines that the application is a distribution application.

If it is determined that the application which receives the install request is a development application (Act 24: YES), the installation control unit 242 decrypts the development application with the installed public key (Act 30). If the development application can be decrypted with the installed public key (Act 30: YES), the installation control unit 242 permits installation of the development application (Act 25) and completes the installation of the development application (Act 26).

If the development application cannot be decrypted with the installed public key (Act 30: NO), the installation control unit 242 prohibits the installation of the development application (Act 27), and stops or ends the installation of the development application (Act 28).

In some embodiments, even if the development application is distributed, only the MFP 2 having the installed public key can install the development application, and thus, it is possible to manage an installation destination of the development application by managing the distribution of the public key. Accordingly, in the present embodiment, it is possible to suppress reverse engineering of the development application due to a third party.

The key data management unit 243 may remove the installed public key after the corresponding development application is installed or after a certain time elapses from the installation, or may not be able to output from the MFP 2.

In addition, the public key may be installed in the emulator 123 so as to make the procedure when developing the application using the MFP 2 having the development mode to be the same as the procedure when developing the application using the emulator 123. If the application that receives the install request is the development application, the emulator 123 may decrypt the development application encrypted with the public key which is one of the pair of the public key and the secret key.

### Fifth Embodiment

In the fourth embodiment, an example in which installation of the public key for decrypting the development application is not limited is described. In the fourth embodiment, management of the install destination of the public key is performed by managing the distribution destination of the public key.

In some embodiments, a mechanism for limiting MFP 2 of the installation destination is placed in the public key itself of the development application, and thereby, only the MFP 2 which is an installation target of the development application can install the public key.

In some embodiments, an electronic signature is attached to the public key for decrypting the development application. That is, in the SDK 122 that creates the development application, a hash value is generated based on a serial number (unique identification information) of the MFP 2 which the installation target of the development application. The SDK 122 generates a signature secret key and a verification public key, encrypts the hash value using the signature secret key, and generates an electronic signature. The SDK 122 attaches the electronic signature to the public key for decrypting the development application.

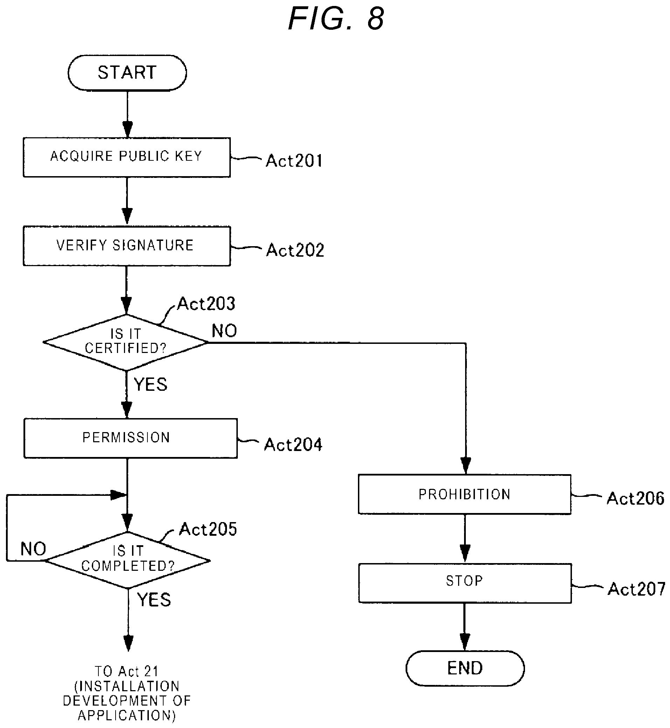

Subsequently, installing of the public key of the application in the installing which is performed by the MFP 2 (key data management unit 243) will be described with reference to a flowchart of FIG. 8.

The key data management unit 243 of the MFP 2 acquires a public key for decrypting the development application and a public key for verification (Act 201).

The key data management unit 243 decrypts an electronic signature attached to the public key for decryption with the verification public key, generates a first hash value, and generates a second hash value based on a serial number of the MFP 2 (Act 202).

If the first and second hash values are equal to each other, the key data management unit 243 determines that the public key for decryption is legitimate (Act 203: YES). The key data management unit 243 permits installation of the public key for decryption (Act 204), and completes the installation of the public key (Act 205: YES). Thereafter, the installation control unit 242 starts installing of an application that receives an installation request (Act 21). The subsequent processing is the same as the processing of the fourth embodiment. Thereby, if the MFP 2 receives the installation request of the development application corresponding to the installed verification public key, the MFP 2 approves and installs the development application.

If the first and second hash values are different from each other, the key data management unit 243 determines that the public key for decryption is not legitimate (Act 203: NO) . The key data management unit 243 prohibits the installation of the public key for decryption (Act 206), and stops or ends the installation of the public key (Act 207: YES). In this case, the installing of the application performed by the MFP 2 is completed.

In some embodiments, it is possible to limit the MFP 2 that permits the installation of the development application, and it is possible to suppress reverse engineering of the development application even if the development application is distributed.

### Modification Example

In the present embodiment, the MFP 2 is used as an example of an apparatus which is an installation target of an application, but the apparatus may be a smartphone or the like, or may be an appropriate device.

As described in detail above, according to this specification, it is possible to provide a technology of suppressing reverse engineering of an application.

While certain embodiments have been described, these embodiments have been presented by way of example only, and are not intended to limit the scope of the inventions. Indeed, the novel methods and systems described herein may be embodied in a variety of other forms; furthermore, various omissions, substitutions and changes in the form of the methods and systems described herein may be made without departing from the scope of the inventions. The accompanying claims and their equivalents are intended to cover such forms or modifications as would fall within the scope of the inventions.

## Claims

1. A method for an application development environment which provides a development environment of an application, comprising:
receiving an installation request of the application;
permitting installation of a development application, when it is determined that the application is the development application; and
prohibiting installation of a distribution application, when it is determined that the application is the distribution application.

2. The method of claim 1, wherein
it is determined that the application is the development application when the application is determined to be an unencrypted application.

3. The method of claim 2, wherein
it is determined that the application is the distribution application when the application is determined to be an encrypted application.

4. The method of claim 1, wherein
it is determined that the application is the distribution application when the application is determined to have a legitimate electronic signature.

5. The method of claim 1, wherein
it is determined that the application is the distribution application when the application is determined to have a setting file.

6. The method of claim 1, wherein
it is determined that the application is the development application when the application is determined to have an attribute value and an extension of a predetermined file.

7. An apparatus comprising:
a memory; and
a processor configured to execute instructions of a program stored in the memory, the instructions being for a method for an application development environment which provides a development environment of an application, the instructions including method steps according to any one of claims 1 to 6.

8. An apparatus comprising:
a memory; and
a processor configured to execute programs stored in the memory, the stored programs including:
an application development mode in which a debug log is able to be output and an operation of an application is confirmed; and
a normal mode in which the debug log is not able to be output,
wherein the processor is configured:
when an installation request of the application is received in the application development mode,
if it is determined that the application is a development application, to permit installation of the development application, and
if it is determined that the application is a distribution application, to prohibit installation of the distribution application.

9. The apparatus according to Claim 8,
wherein the installation of the distribution application is permitted in the normal mode, and
the processor is configured, when it is determined that the distribution application is installed in the application development mode, to uninstall the installed distribution application.

10. The apparatus according to Claim 8 or 9, wherein the processor is configured:
when the installation request of the application is received in the application development mode,
if it is determined that the application is the development application, to perform decryption of the development application which is encrypted with a secret key by using a public key which is one of a pair of the secret key and the public key,
if the development application is able to be decrypted, to permit installation of the development application, and
if the development application is not able to be decrypted, to prohibit the installation of the development application.

11. The apparatus according to Claim 10,
wherein the processor is configured:
when the installation request of the application is received in the application development mode,
if it is determined that the application is the development application, to generate a hash value by decrypting an electronic signature that is an electronic signature of the development application and that encrypts identification information of the apparatus using a signature secret key, with a verification public key which is one of a pair of a signature private key and the verification public key,
if the hash value matches with a hash value of the identification information of the apparatus, to permit installation of the secret key, and
if the hash value does not match with the hash value of the identification information, to prohibit the installation of the secret key.

12. A method for an application development environment which provides a development environment of an application, comprising:
performing an application development mode in which a debug log is able to be output and an operation of an application is confirmed; or performing a normal mode in which the debug log is not able to be output,
wherein the method comprises:
when an installation request of the application is received in the application development mode,
if it is determined that the application is a development application, permitting installation of the development application, and
if it is determined that the application is a distribution application, prohibiting installation of the distribution application.

13. The method according to Claim 12,
wherein the installation of the distribution application is permitted in the normal mode, and
the method comprises:
when it is determined that the distribution application is installed in the application development mode, uninstalling the installed distribution application.

14. The method according to Claim 12 or 13, comprising:
when the installation request of the application is received in the application development mode,
if it is determined that the application is the development application, performing decryption of the development application which is encrypted with a secret key by using the public key which is one of a pair of the secret key and the public key,
if the development application is able to be decrypted, permitting installation of the development application, and
if the development application is not able to be decrypted, prohibiting the installation of the development application.

15. The method according to Claim 14, comprising:
when the installation request of the application is received in the application development mode,
if it is determined that the application is the development application, generating a hash value by decrypting an electronic signature that is an electronic signature of the development application and that encrypts identification information of the apparatus using a signature secret key, with a verification public key which is one of a pair of a signature private key and the verification public key,
if the hash value matches with a hash value of the identification information of the apparatus, permitting installation of the secret key, and
if the hash value does not match with the hash value of the identification information, prohibiting the installation of the secret key.
